# EUROPÄISCHE PATENTSCHRIFT

(11) **EP 3 765 827 B1**
(45) Veröffentlichungstag und Bekanntmachung des Hinweises auf die Patenterteilung: **13.11.2024**
(21) Anmeldenummer: 19709676.1
(22) Anmeldetag: 05.03.2019
(51) Int. Cl.: G01K 7/18

(54) **TEMPERATURSENSORELEMENT**
TEMPERATURE SENSOR ELEMENT
ÉLÉMENT CAPTEUR DE TEMPÉRATURE

(30) Priorität: 15.03.2018 DE 102018203971; 15.03.2018 DE 202018001393 U
(43) Veröffentlichungstag der Anmeldung: 20.01.2021
(73) Patentinhaber: Yageo Nexensos GmbH, 63801 Kleinostheim (DE)
(72) Erfinder: BLEIFUSS, Martin, 63796 Kahl (DE); URFELS, Stephan, 60596 Frankfurt (DE); HINRICH, Andreas, 63579 Freigericht (DE)
(74) Vertreter: Meissner Bolte Partnerschaft mbB
(86) Internationale Anmeldenummer: PCT/EP2019/055409
(87) Internationale Veröffentlichungsnummer: WO 2019/174968

(56) Entgegenhaltungen:
- CN-U- 207 095 727
- DE-A1- 102010 050 315
- US-A1- 2009 085 031

## Beschreibung

Die vorliegende Erfindung betrifft ein System zum Transport eines Temperatursensorelements und ein Verfahren zur Herstellung eines Tem peratursensorelements.

Aus dem Stand der Technik sind verschiedenste Temperatursensorelemente zum Verbinden mit einem elektronischen Bauelement oder einer elektronischen Baugruppe bekannt. Derartige Temperatursensorelemente können beispielsweise auf Leiterplatten, zum Beispiel auf keramischen Leiterplatten vom Typ Direct Copper Bonded, DCB, mittels Sintern oder Kleben angeordnet werden.

Ein Verfahren zur Herstellung von gesinterten Baugruppen wird in der DE 10 2010 050 315 C5 beschrieben. Hier wird ein Temperatursensorelement mit einer sinterfähigen Metallisierung an der Unterseite eines Substrats auf ein elektronisches Bauelement aufgesintert. Das Temperatursensorelement hat auf der Oberseite des Substrats eine Leiterbahnanordnung mit Kontaktflächen zur elektrischen Kontaktierung der Leiterbahnanordnung. Die Leiterbahnanordnung dient als thermisch empfindlicher Widerstand. Die Kontaktflächen auf der Oberseite des Substrats können, beispielsweise mittels eines Bonddrahtes, elektrisch kontaktiert werden.

US 2009085031 offenbart ein waferförmiges Messgerät.

CN207095727 beschreibt ein drahtloses Überwachungssystem basierend auf einem flexibel erweiterbaren Blattflächensensor.

Allerdings haben die aus dem Stand der Technik bekannten Temperatursensorelemente den Nachteil, dass die Temperatursensorelemente vor dem Anordnen auf den elektronischen Bauelementen, das üblicherweise auf einer der Herstellung der Temperatursensorelemente nachgelagerten Wertschöpfungsstufe stattfindet, einzeln mit einem Verbindungsmittel, beispielsweise mit einer Sinterpaste oder mit einem Klebstoff versehen werden müssen. Dies erfordert einen zusätzlichen Arbeitsschritt. Weiterhin können die Temperatursensorelemente während dem Anordnen des Verbindungsmittels beschädigt oder sogar zerstört werden.

Weiterhin können die Temperatursensorelemente während des Transports zum Anordnen auf den elektronischen Bauelementen verrutschen oder beschädigt werden.

Aufgabe der vorliegenden Erfindung ist es daher, ein verbessertes System zum Transport eines Temperatursensorelements bereitzustellen, das die Nachteile des Stands der Technik überwindet.

Diese Aufgabe wird erfindungsgemäß durch ein System zum Transport eines Temperatursensorelements gemäß des Gegenstands des Anspruchs 1 gelöst.

Die Erfindung schlägt ein System zum Transport eines Temperatursensorelements vor, aufweisend:
zumindest ein Temperatursensorelement zum Verbinden mit einem elektronischen Bauelement oder einer elektronischen Baugruppe, aufweisend:
zumindest ein Temperatursensorelement zum Verbinden mit einem elektronischen Bauelement oder einer elektronischen Baugruppe, aufweisend: zumindest ein elektrisch isolierendes Substrat,
zumindest eine Sensorstruktur mit Kontaktflächen zur Kontaktierung der Sensorstruktur angeordnet zumindest bereichsweise auf einer ersten Seite des elektrisch isolierenden Substrats, und
   (i) zumindest einen Klebstoff zumindest teilweise vorappliziert auf einer zweiten Seite des elektrisch isolierenden Substrats, wobei die erste Seite der zweiten Seite gegenüberliegt, oder
   (ii) zumindest eine Metallisierungsschicht angeordnet zumindest bereichsweise auf der zweiten Seite des elektrisch isolierenden Substrats, und zumindest eine Sinterpaste zumindest teilweise vorappliziert auf der Metallisierungsschicht; und zumindest ein Trägerelement, wobei das Trägerelement zumindest teilweise mit dem vorapplizierten Klebstoff oder der vorapplizierten Sinterpaste in Kontakt steht.

Der Begriff "Substrat" kann verwendet werden, um ein elektrisch isolierendes Trägermaterial für eine Sensorstruktur zu bezeichnen. Die Oberflächen der ersten und zweiten Seite des Substrats können im Wesentlichen planar ausgestaltet sein.

Eine "Sensorstruktur" kann als eine Struktur verstanden werden, die angepasst ist einen Temperaturwert direkt oder indirekt zu erfassen. Beispielsweise kann die Sensorstruktur ein auf das Substrat aufgedampftes Widerstandsnetzwerk sein. Die Kontaktflächen zur Kontaktierung der Sensorstruktur können aus leitfähigem Material ausgebildet sein, beispielsweise aus dem gleichen Material wie auch die Sensorstruktur selbst. Beispielsweise kann jeweils eine Kontaktfläche an den Enden der Sensorstruktur angeordnet sein, um einen elektrischen Widerstand zwischen den beiden Kontaktflächen zu messen.

Die Metallisierungsschicht kann beispielsweise eine Goldschicht, eine Silberschicht oder eine Metalllegierung sein, die auf der zweiten Seite des Substrats angeordnet, beispielsweise aufgedampft oder in Dickschichttechnik aufgebracht, ist.

Unter einem vorapplizierten Klebstoff oder eine vorapplizierte Sinterpaste kann ein Verbindungsmittel verstanden werden, welches bereits vorab auf der zweiten Seite des Substrats oder auf der Metallisierungsschicht angeordnet werden kann und im Wesentlichen positionstreu darauf gehalten wird. Beispielsweise kann ein solches Verbindungsmittel als Verbindungsmittelschicht vorappliziert werden.

**Es ist möglich**, ein Temperatursensorelement herzustellen, das eine gute Transportierbarkeit des Temperatursensorelements samt vorappliziertem Verbindungsmittel ermöglicht.

Durch das Vorapplizieren des Verbindungsmittels noch vor dem Transport zu dem Endverarbeiter, kann das Applizieren des Verbindungsmittels in der Fertigung des Endverarbeiters entfallen, so dass Prozesszeit und Prozesskosten bei diesem eingespart werden können.

Beispielsweise kann es sich bei dem vorapplizierten Verbindungsmittel um einen nur teilweise ausgehärteten, nicht vollständig chemisch vernetzten, hochviskosen Klebstoff handeln, welcher mittels Wärmebehandlung, beispielsweise durch induktive Erwärmung, während des letztendlichen Verbindens mit einem elektronischen Bauelement oder einer elektronischen Baugruppe vollständig aushärtbar und chemisch vernetzbar ist. Alternativ dazu kann es sich bei dem vorapplizierten Verbindungsmittel um eine Sinterpaste handeln, welche durch Erhitzen, beispielsweise nach dem Auftragen der Sinterpaste, vorgetrocknet wird. Als Sinterpaste kann beispielsweise die in EP 2 428 293 B1 beschriebene Sinterpaste verwendet werden.

In einem Beispiel sind die Kontaktflächen angepasst zur elektrischen Kontaktierung der Sensorstruktur, und die Kontaktflächen sind auf der ersten Seite des elektrisch isolierenden Substrats angeordnet.

Eine Anordnung der Kontaktflächen auf der ersten Seite des elektrisch isolierenden Substrats ermöglicht eine bessere Kontaktierbarkeit der Kontaktflächen, beispielsweise mittels eines Bonddrahtes. In alternativen Beispielen können aber beide oder jeweils nur eine Kontaktfläche auch an der Seite des Substrats angeordnet sein.

In noch einem weiteren Beispiel ist zumindest eine Passivierungsschicht zumindest bereichsweise auf der Sensorstruktur angeordnet, bevorzugt vollflächig angeordnet auf der ersten Seite des Substrats.

Als Passivierungssicht kann eine reaktionsträge Schicht verstanden werden, die auf der Sensorstruktur angeordnet ist. Vorteilhaft kann durch Passivierung ein stark verringertes Reaktionsvermögen an der Oberfläche der Sensorstruktur erreicht werden. Somit kann, wegen des verringerten Reaktionsvermögens an der Oberfläche der Sensorstruktur, das Temperatursensorelement mit einer hohen Genauigkeit über lange Zeiträume hinweg betrieben werden.

Beispielsweise kann die Passivierungsschicht zumindest ein Polyimidmaterial, ein Glasmaterial, ein Keramikmaterial und/oder ein Glaskeramikmaterial umfassen.

In einem Beispiel umfasst die Sinterpaste eine Silbersinterpaste, und die Sinterpaste ist auf der Metallisierungsschicht vorappliziert mittels Schablonendruck, Siebdruck, Jetprinting, Dispensen, oder Transferdruck.

Das Aufbringen der Sinterpaste auf der Metallisierungsschicht kann beispielsweise mit einer vorbestimmten Struktur erfolgen, wobei die vorbestimmte Struktur passgenau zur Struktur des Substrats sein kann. Mittels der genannten Drucktechniken kann die Sinterpaste mit einer derartigen Form bzw. mit einer derartigen Struktur aufgebracht werden, die der Form bzw. der Struktur des Substrats, bzw. des strukturierten Substrats entspricht, so dass beim Verbinden mit einem elektronischen Bauelement oder einer elektronischen Baugruppe die Sinterpaste passgenau auf- bzw. angebracht werden kann.

In einem weiteren Beispiel umfasst der Klebstoff einen "B-stage" oder "pre-dried" Adhesive, und der Klebstoff ist auf der zweiten Seite des elektrisch isolierenden Substrats vorappliziert mittels Schablonendruck, Siebdruck, Jetprinting, Dispensen, oder Transferdruck.

Unter "B-stage" oder "pre-dried" Adhesives sind Klebstoffe zu verstehen, die aus einem Einkomponentensystem bestehen, insbesondere auf Basis von Epoxyverbindungen und die ihre Reaktivität über einen längeren Zeitraum behalten. Die Aushärtung des Klebstoffes erfolgt nach Positionierung der zu verklebenden Komponenten durch Wärme und Druck.

In einem Beispiel umfasst das Substrat zumindest ein keramisches Isolationsmaterial, insbesondere Aluminiumoxid, Aluminiumnitrid oder Siliciumcarbid, ein Glassandwichmaterial, oder ein Leiterplattenmaterial.

Vorteilhaft bieten keramische Isolationsmaterialien eine Kombination aus hervorragenden mechanischen, chemischen, thermischen und elektrischen Eigenschaften.

In einem weiteren Beispiel umfasst die Metallisierungsschicht zumindest ein Goldmaterial, ein Silbermaterial, oder eine Metalllegierung.

In noch einem Beispiel weist die Sensorstruktur zumindest ein Widerstandselement auf, wobei das Widerstandselement durch eine Dünnschicht aus Platin oder einer Platinlegierung gebildet ist.

In noch einem Beispiel weist die Sensorstruktur zumindest ein Widerstandselement auf, wobei das Widerstandselement durch eine Dickschicht, die zum Beispiel durch Siebdruck oder Inkjetdruck strukturiert aufgebracht wird und die aus Platin oder einer Platinlegierung gebildet ist.

Beispielsweise kann die Sensorstruktur als PT100 oder PT1000 ausgebildet sein und als Messeffekt die Abhängigkeit des elektrischen Widerstands von der Temperatur bei Platin anwenden.

In einem weiteren Beispiel weist die Sensorstruktur andere metallische Schichten auf, deren elektrischer Widerstand sich mit der Temperatur ändert, insbesondere Nickel, Molybdän, Gold, Silber, Kupfer oder Metalllegierungen.

In einem weiteren Beispiel weist die Sensorstruktur Volumenstrukturen oder Volumenkörper auf mit thermoresistiven Eigenschaften, insbesondere oxidmetallische Körper oder Schichtaufbauten.

Damit der vorapplizierte Klebstoff oder die vorapplizierte Sinterpaste während des Transports und Handlings des Temperatursensorelements positionstreu auf diesem verbleibt steht das Trägerelement zumindest teilweise mit dem vorapplizierten Klebstoff oder der vorapplizierten Sinterpaste in Kontakt. Hierbei kann beispielsweise ein Anordnen des Temperatursensorelements auf dem Trägerelement verstanden werden oder das Vereinzeln von vielen parallel gefertigten Temperatursensorelementen aus einem Nutzen.

Vorteilhaft bietet der vorapplizierte Klebstoff oder die vorapplizierte Sinterpaste eine ausreichende Haltekraft des Temperatursensorelements auf dem Trägerelement, bis der vorapplizierte Klebstoff oder die vorapplizierte Sinterpaste eine ausreichende Haftfestigkeit bei der letztendlichen Anbringung des Temperatursensorelements auf dem elektronischen Bauelement oder der elektronischen Baugruppe während der Fertigung aufbaut.

Das Temperatursensorelement bzw. eine Anordnung mit mehreren Temperatursensorelementen kann auf dem Trägerelement, beispielsweise einem Film-Frame bereitgestellt werden. In einer derartigen Lieferform kann es direkt in einem nächsten Prozess bzw. Verfahrensschritt vom Film-Frame entnommen und auf einem elektronischen Bauelement oder einer elektronischen Baugruppe, gesintert oder geklebt werden. Dies entspricht der sogenannten Pick & Place-Technologie. Das bedeutet, dass das Temperaursensorelement mit Hilfe einer Robotik bzw. einer Greifvorrichtung oder einer Düse bzw. einer Ansaugvorrichtung vom Träger bzw. dem Film-Frame gelöst und zu dem entsprechenden elektronischen Bauelement oder der elektronischen Baugruppe transportiert werden kann.

In einem Beispiel weist das System eine Vielzahl von Temperatursensorelementen auf, wobei das Trägerelement, zumindest teilweise auf dem vorapplizierten Klebstoff oder der vorapplizierten Sinterpaste angeordnet ist. Beispielsweise kann diese Vielzahl mehrere hundert oder auch tausend Temperatursensorelemente umfassen, die bereits strukturiert auf dem Trägerelement angeordnet sind.

In der Erfindung umfasst das Trägerelement zumindest eine Transferfolie oder einen Wafer-Frame.

Beispielsweise kann eine Folie, mit oder ohne einstellbarer Klebekraft in einem Rahmen, wie einem Film-Frame, gespannt sein. Auch kann die Folie endlos auf einem Spulenträger gewickelt sein. Beispielsweise kann es sich bei der Transferfolie um eine UV-Folie handeln.

Weiterhin umfasst die Erfindung ein Verfahren zur Herstellung eines Temperatursensorelements zum Verbinden mit einem elektronischen Bauelement oder einer elektronischen Baugruppe, aufweisend:
Bereitstellen zumindest ein elektrisch isolierendes Substrat;
Anordnen zumindest eine Sensorstruktur mit Kontaktflächen zur Kontaktierung der Sensorstruktur zumindest bereichsweise auf einer ersten Seite des elektrisch isolierenden Substrats; und
   (i) Vorapplizieren zumindest einen Klebstoff zumindest teilweise auf einer zweiten Seite des elektrisch isolierenden Substrats, wobei die erste Seite der zweiten Seite gegenüberliegt,
      oder
   (ii) Anordnen zumindest eine Metallisierungsschicht zumindest bereichsweise auf der zweiten Seite des elektrisch isolierenden Substrats, und Vorapplizieren zumindest eine Sinterpaste zumindest teilweise auf der Metallisierungsschicht.

In einem Beispiel weist das Verfahren auf:
Anordnen des Temperatursensorelements auf zumindest einem Trägerelement, wobei das Trägerelement zumindest teilweise mit dem vorapplizierten Klebstoff oder der vorapplizierten Sinterpaste in Kontakt steht.

Weitere Merkmale und Vorteile der Erfindung ergeben sich aus der nachfolgenden Beschreibung, in der bevorzugte Ausführungsformen der Erfindung anhand von schematischen Zeichnungen erläutert sind.

Dabei zeigt:
- Figur 1: eine schematische Ansicht eines Temperatursensorelements gemäß einer ersten Ausführungsform der Erfindung;
- Figur 2: eine schematische Ansicht eines Temperatursensorelements gemäß einer zweiten Ausführungsform der Erfindung;
- Figur 3: eine schematische Ansicht eines Systems zum Transport eines Temperatursensorelements gemäß einer Ausführungsform der Erfindung; und
- Figur 4: eine schematische Ansicht eines Temperatursensorelements gemäß der ersten Ausführungsform der Erfindung verbunden mit einem elektronischen Bauelement.

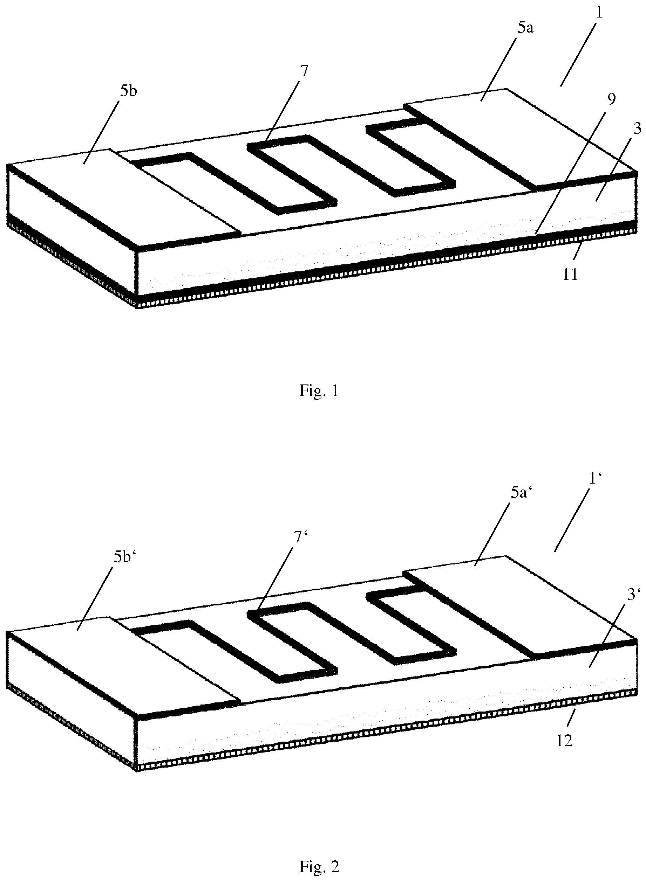

In Figur 1 wird eine schematische Ansicht eines Temperatursensorelements 1 gemäß einer ersten Ausführungsform der Erfindung gezeigt. Das gezeigte Temperatursensorelement 1 weist ein Substrat 3 auf, mit einer auf einer ersten Seite des Substrats 3 angeordneten Sensorstruktur 7. In Figur 1 wird die Sensorstruktur 7 als mäanderförmig verlaufende Leiterbahn zwischen zwei Kontaktflächen 5a, 5b gezeigt. In nicht gezeigten Ausführungsformen kann die Sensorstruktur auch anders ausgestaltet sein, zum Beispiel können die Windungen ineinander liegend angeordnet sein, um auf engem Raum eine größere Strecke zurücklegen zu können und damit einen bestimmten Widerstand zu erzielen.

Die Sensorstruktur 7 kann aus Platin hergestellt sein und als PT100 oder PT1000 verwendet werden. Auf der Sensorstruktur 7 kann, in nicht gezeigten Ausführungsformen, eine Passivierungsschicht, beispielsweise aus Glas, angeordnet werden, welche die Sensorstruktur vor funktionsbeeinträchtigenden Umgebungseinflüssen schützt.

Das Substrat 3 kann aus einem keramischen Isolationsmaterial, insbesondere aus Aluminiumoxid, Aluminiumnitrid, Siliciumcarbid, einem Glassandwichmaterial, oder einem Leiterplattenmaterial gebildet sein und als Träger für die Sensorstruktur 7 dienen. In der gezeigten Ausführungsform ist das Substrat 3 elektrisch isolierend ausgestaltet und isoliert die Sensorstruktur 7 von dem elektronischen Bauelement oder der elektronischen Baugruppe (nicht gezeigt in Figur 1), auf dem das Substrat 3 befestigt wird. In nicht gezeigten Ausführungsformen kann das Substrat 3 aber auch zumindest bereichsweise elektrisch leitend ausgestaltet sein, damit eine Kontaktfläche an einer zweiten Seite des Substrats 3, welcher der ersten Seite gegenüberliegt, angeordnet werden.

In der in Figur 1 gezeigten Ausführungsform ist auf der zweiten Seite des Substrats 3 eine Metallisierungsschicht 9 angeordnet, auf der wiederum eine vorapplizierte Sinterpaste 11 angeordnet ist. Die Sinterpaste 11 kann auf der Metallisierungsschicht 9 beispielsweise mittels Schablonendruck, Siebdruck, Jetprinting, oder Dispensen vorappliziert werden. Nach dem Anordnen kann die vorapplizierte Sinterpaste 11 zunächst vorgetrocknet werden, bevor das Temperatursensorelement 1 weiterverarbeitet werden kann. Beispielsweise kann eine Vielzahl von Tempersensorelementen auf einem einzigen Substrat aufgebaut werden und mittels Sägen, Laserschneiden, usw. vereinzelt werden.

Figur 2 zeigt eine schematische Ansicht eines Temperatursensorelements 1' gemäß einer zweiten Ausführungsform der Erfindung. Die gezeigte Ausführungsform unterscheidet sich von der in Figur 1 gezeigten Ausführungsform dadurch, dass keine Metallisierungsschicht an dem Substrat 3' angeordnet ist. Auch ist in der gezeigten Ausführungsform keine vorapplizierte Sinterpaste vorhanden. Stattdessen ist in der gezeigten Ausführungsform ein Klebstoff 12 auf der zweiten Seite des elektrisch isolierenden Substrats 3' vorappliziert.

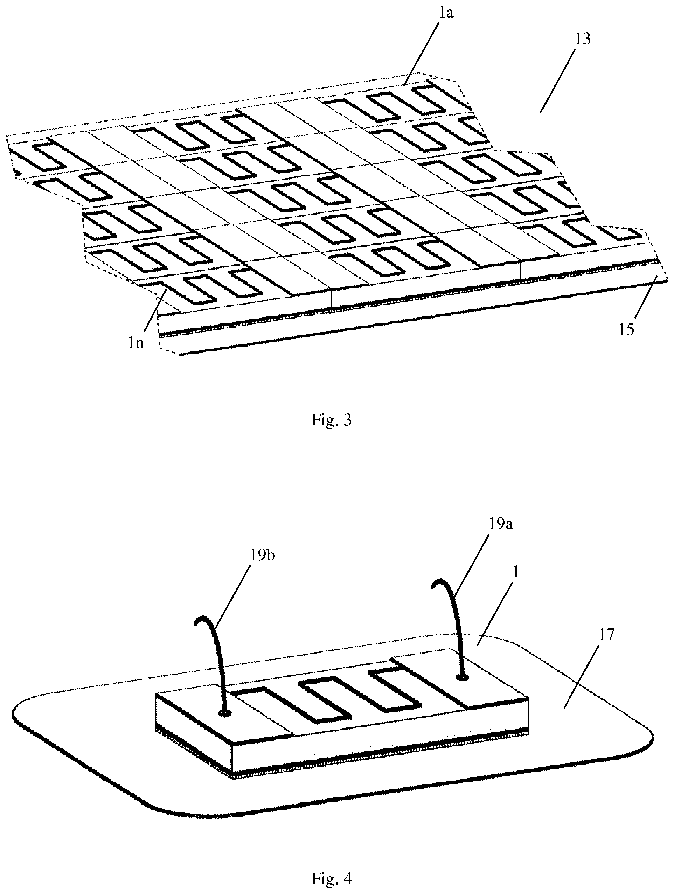

In Figur 3 wird eine schematische Ansicht eines Systems 13 zum Transport eines Temperatursensorelements 1a bis 1n gemäß einer Ausführungsform der Erfindung gezeigt. Die in Figur 3 gezeigten Temperatursensorelemente 1a bis 1n können baugleich mit dem in Figur 1 gezeigten Temperatursensorelement 1 sein. Alternativ können aber auch Temperatursensorelemente verwendet werden, wie sie in Figur 2 gezeigt sind. In dem in Figur 3 gezeigten System 13 sind mehrere Temperatursensorelemente 1a bis 1n benachbart auf einem Trägerelement 15 angeordnet.

Das gezeigte Trägerelement 15 kann beispielsweise ein Film-Frame sein. In einer derartigen Lieferform können die Temperatursensorelements 1a bis 1n in einem Prozess bzw. Verfahrensschritt beim Endverarbeiter vom Film-Frame entnommen werden und auf einem elektronischen Bauelement oder einer elektronischen Baugruppe gesintert oder geklebt werden. Beispielsweise können die Temperatursensorelements 1a bis 1n mit Hilfe einer Robotik bzw. einer Greifvorrichtung oder einer Düse bzw. einer Ansaugvorrichtung (nicht gezeigt) vom Trägerelement 15 bzw. dem Film-Frame gelöst werden und zu dem entsprechenden elektronischen Bauelement oder der elektronischen Baugruppe transportiert werden.

Figur 4 zeigt eine schematische Ansicht eines Temperatursensorelements 1 gemäß der ersten Ausführungsform der Erfindung verbunden mit einem elektronischen Bauelement 17. Das Temperatursensorelement 1 kann baugleich mit dem in Figur 1 gezeigten Temperatursensorelement 1 sein. In der gezeigten Ausführungsform ist das Temperatursensorelement 1 auf dem elektronischen Bauelement 17 aufgesintert und die Kontaktflächen sind mittels Bonddrähten 19a, 19b kontaktiert. In einer nicht gezeigten Ausführungsform kann das Temperatursensorelement auch auf das elektronische Bauelement aufgeklebt sein.

### Bezuaszeichenliste

- 1, 1a - 1n, 1': Temperatursensorelement
- 3, 3': Substrat
- 5a, 5b, 5a', 5b': Kontaktflächen
- 7, 7': Sensorstruktur
- 9: Metallisierungsschicht
- 11: Sinterpaste
- 12: Klebstoff
- 13: System zum Transport
- 15: Trägerelement
- 17: elektronisches Bauelement
- 19a, 19b: Bonddrähte

## Patentansprüche

1. Ein System zum Transport eines Temperatursensorelements, aufweisend:
zumindest ein Temperatursensorelement zum Verbinden mit einem elektronischen Bauelement (17) oder einer elektronischen Baugruppe, aufweisend:
zumindest ein elektrisch isolierendes Substrat (3),
zumindest eine Sensorstruktur (7) mit Kontaktflächen (5a, 5b) zur Kontaktierung der Sensorstruktur (7) angeordnet zumindest bereichsweise auf einer ersten Seite des elektrisch isolierenden Substrats (3), und
(i) zumindest einen Klebstoff (12) zumindest teilweise vorappliziert auf einer zweiten Seite des elektrisch isolierenden Substrats (3), wobei die erste Seite der zweiten Seite gegenüberliegt, oder
(ii) zumindest eine Metallisierungsschicht (9) angeordnet zumindest bereichsweise auf der zweiten Seite des elektrisch isolierenden Substrats (3), und zumindest eine Sinterpaste (11) zumindest teilweise vorappliziert auf der Metallisierungsschicht (9); und
zumindest ein Trägerelement (15), wobei das Trägerelement (15) zumindest teilweise mit dem vorapplizierten Klebstoff (12) oder der vorapplizierten Sinterpaste (11) in Kontakt steht,
**dadurch gekennzeichnet, dass**
das Trägerelement (15) zumindest eine Transferfolie oder einen Wafer-Frame umfasst.

2. System nach Anspruch 1, aufweisend: eine Vielzahl von Temperatursensorelementen, wobei das Trägerelement (15) zumindest teilweise auf dem vorapplizierten Klebstoff (12) oder der vorapplizierten Sinterpaste (11) angeordnet ist.

3. System nach einem der Ansprüche 1 oder 2, wobei die Kontaktflächen (5a, 5b) zur elektrischen Kontaktierung mit der Sensorstruktur (7) verbunden sind, und auf der ersten Seite des elektrisch isolierenden Substrats (3) angeordnet sind.

4. System nach einem der Ansprüche 1 - 3, aufweisend:
zumindest eine Passivierungsschicht angeordnet zumindest bereichsweise auf der Sensorstruktur (7), bevorzugt vollflächig angeordnet auf der ersten Seite des Substrats (3).

5. System nach Anspruch 4, wobei die Passivierungsschicht zumindest ein Polyimidmaterial, ein Glasmaterial, ein Keramikmaterial und/oder ein Glaskeramikmaterial umfasst.

6. System nach einem der vorangehenden Ansprüche, wobei die Sinterpaste (11) eine Silbersinterpaste umfasst, und wobei die Sinterpaste (11) auf der Metallisierungsschicht (9) vorappliziert ist mittels Schablonendruck, Siebdruck, Jetprinting, Dispensen, oder Transferdruck.

7. System nach einem der vorangehenden Ansprüche, wobei der Klebstoff (12) einen "B-stage" oder "pre-dried" Adhesive umfasst, und wobei der Klebstoff (12) auf der zweiten Seite des elektrisch isolierenden Substrats (3) vorappliziert ist mittels Schablonendruck, Siebdruck, Jetprinting, Dispensen, oder Transferdruck.

8. System nach einem der vorangehenden Ansprüche, wobei das Substrat (3) zumindest ein keramisches Isolationsmaterial, insbesondere Aluminiumoxid, Aluminiumnitrid, oder Siliciumcarbid, ein Glassandwichmaterial, oder ein Leiterplattenmaterial umfasst.

9. System nach einem der vorangehenden Ansprüche, wobei die Metallisierungsschicht (9) zumindest ein Goldmaterial, ein Silbermaterial, oder eine Metalllegierung umfasst.

10. System nach einem der vorangehenden Ansprüche, wobei die Sensorstruktur (7) zumindest ein Widerstandselement aufweist, wobei das Widerstandselement durch eine Dünnschicht aus Platin oder einer Platinlegierung gebildet ist.

11. Ein Verfahren zur Herstellung eines Temperatursensorelements zum Verbinden mit einem elektronischen Bauelement (17) oder einer elektronischen Baugruppe, aufweisend:
Bereitstellen zumindest ein elektrisch isolierendes Substrat (3) umfassend ein keramisches Isolationsmaterial, ein Glassandwichmaterial oder ein Leiterplattenmaterial;
Anordnen zumindest eine Sensorstruktur (7) mit Kontaktflächen (5a, 5b) zur Kontaktierung der Sensorstruktur (7) zumindest bereichsweise auf einer ersten Seite des elektrisch isolierenden Substrats (3); und
(i) Vorapplizieren zumindest einen Klebstoff (12) zumindest teilweise auf einer zweiten Seite des elektrisch isolierenden Substrats (3), wobei die erste Seite der zweiten Seite gegenüberliegt, oder
(ii) Anordnen zumindest eine Metallisierungsschicht (9) zumindest bereichsweise auf der zweiten Seite des elektrisch isolierenden Substrats (3), und Vorapplizieren zumindest eine Sinterpaste (11) zumindest teilweise auf der Metallisierungsschicht (9) und Anordnen des Temperatursensorelements auf zumindest einem Trägerelement (15), wobei das Trägerelement (15) zumindest teilweise mit dem vorapplizierten Klebstoff (12) oder der vorapplizierten Sinterpaste (11) in Kontakt steht, wobei das Trägerelement (15) zumindest eine Transferfolie oder einen Wafer-Frame umfasst.

## Claims

1. A system for transporting a temperature sensor element, comprising:
at least one temperature sensor element for being connected to an electronic component (17) or an electronic assembly, with said temperature sensor element comprising:
at least one electrically insulating substrate (3),
at least one sensor structure (7) with contact surfaces (5a, 5b) for contacting the sensor structure (7), with said sensor structure being arranged at least regionally on a first side of the electrically insulating substrate (3), and
(i) at least one adhesive (12) that is at least partially pre-applied to a second side of the electrically insulating substrate (3), wherein the first side lies opposite of the second side, or
(ii) at least one metallization layer (9) that is arranged at least regionally on the second side of the electrically insulating substrate (3) and at least one sintering paste (11) that is at least partially pre-applied to the metallization layer (9); and
at least one carrier element (15), wherein the carrier element (15) is at least partially in contact with the pre-applied adhesive (12) or the pre-applied sintering paste (12),
**characterized in that**
the carrier element (15) at least comprises a transfer film or a wafer frame.

2. The system according to claim 1, comprising: a plurality of temperature sensor elements, wherein the carrier element (15) is at least partially arranged on the pre-applied adhesive (12) or the pre-applied sintering paste (11).

3. The system according to one of claims 1 or 2, wherein the contact surfaces (5a, 5b) for electric contacting are connected to the sensor structure (7) and arranged on the first side of the electrically insulating substrate (3).

4. The system according to one of claims 1-3, comprising:
at least one passivation layer that is arranged at least regionally on the sensor structure (7), preferably over the entire surface of the first side of the substrate (3) .

5. The system according to claim 4, wherein the passivation layer at least comprises a polyimide material, a glass material, a ceramic material and/or a glass ceramic material.

6. The system according to one of the preceding claims, wherein the sintering paste (11) comprises a silver sintering paste, and wherein the sintering paste (11) is pre-applied to the metallization layer (9) by means of stencil printing, screen printing, jet printing, dispensing or transfer printing.

7. The system according to one of the preceding claims, wherein the adhesive (12) comprises a "B-stage" or "pre-dried" adhesive, and wherein the adhesive (12) is pre-applied to the second side of the electrically insulating substrate (3) by means of stencil printing, screen printing, jet printing, dispensing or transfer printing.

8. The system according to one of the preceding claims, wherein the substrate (3) comprises at least one ceramic insulating material, particularly aluminum oxide, aluminum nitride or silicon carbide, a glass sandwich material or a printed circuit board material.

9. The system according to one of the preceding claims, wherein the metallization layer (9) at least comprises a gold material, a silver material or a metal alloy.

10. The system according to one of the preceding claims, wherein the sensor structure (7) has at least one resistance element, and wherein the resistance element is formed by a thin film of platinum or a platinum alloy.

11. A method for producing a temperature sensor element for being connected to an electronic component (17) or an electronic assembly, with said method comprising the following steps:
providing at least one electrically insulating substrate (3) that comprises a ceramic insulating material, a glass sandwich material or a printed circuit board material;
arranging at least one sensor structure (7) with contact surfaces (5a, 5b) for contacting the sensor structure (7) at least regionally on a first side of the electrically insulating substrate (3); and
(i) pre-applying at least one adhesive (12) at least partially to a second side of the electrically insulating substrate (3), wherein the first side lies opposite of the second side, or
(ii) arranging at least one metallization layer (9) at least regionally on the second side of the electrically insulating substrate (3) and pre-applying at least one sintering paste (11) at least partially to the metallization layer (9) and
arranging the temperature sensor element on at least one carrier element (15), wherein the carrier element (15) is at least partially in contact with the pre-applied adhesive (12) or the pre-applied sintering paste (11), wherein the carrier element (15) comprises at least one transfer film or a wafer frame.

## Revendications

1. Un système, destiné à transporter un élément capteur de température, comportant :
au moins un élément capteur de température, destiné à être connecté avec un composant électronique (17) ou un module électronique, comportant :
au moins un substrat (3) isolant électrique,
au moins une structure de capteur (7) pourvue de surfaces de contact (5a, 5b) pour la mise en contact de la structure de capteur (7), placée au moins par endroits sur une première face du substrat (3) isolant électrique et
(i) au moins un agent adhésif (12), pré-appliqué au moins en partie sur une deuxième face du substrat (3) isolant électrique, la première face étant placée au vis-à-vis de la deuxième face ou
(ii) au moins une couche de métallisation (9), placée au moins par endroits sur la deuxième face du substrat (3) isolant électrique et au moins une pâte de brasure (11) pré-appliquée au moins en partie sur la couche de métallisation (9) ; et
au moins un élément de support (15), l'élément de support (15) étant au moins en contact partiel avec l'agent adhésif (12) pré-appliqué ou avec la pâte de brasure (11) pré-appliquée,
**caractérisé en ce que**
l'élément de support (15) comprend au moins un film de transfert ou un cadre de tranche.

2. Système selon la revendication 1, comportant : une pluralité d'éléments capteurs de température, l'élément de support (15) étant placé au moins en partie sur l'agent adhésif (12) pré-appliqué ou sur la pâte de brasure (11) pré-appliquée.

3. Système selon l'une quelconque des revendications 1 ou 2, pour la mise en contact électrique, les surfaces de contact (5a, 5b) étant connectées avec la structure de capteur (7) et étant placées sur la première face du substrat (3) isolant électrique.

4. Système selon l'une quelconque des revendications 1 à 3, comportant:
au moins une couche de passivation, placée au moins par endroits sur la structure de capteur (7), de préférence à pleine surface sur la première face du substrat (3).

5. Système selon la revendication 4, la couche de passivation comprenant au moins une matière polyimide, une matière en verre, une matière céramique et / ou une matière vitrocéramique.

6. Système selon l'une quelconque des revendications précédentes, la pâte de brasure comprenant une pâte de brasure argent et la pâte de brasure (11) étant pré-appliquée sur la couche de métallisation (9) par impression au pochoir, par sérigraphie, par impression au jet d'encre, par dispensation ou par impression par transfert.

7. Système selon l'une quelconque des revendications précédentes, l'agent adhésif comprenant un adhésif « b-stage » ou « pre-dried » et l'agent adhésif (12) étant pré-appliqué sur la deuxième face du substrat (3) isolant électrique par impression au pochoir, par sérigraphie, par impression au jet d'encre, par dispensation ou par impression par transfert.

8. Système selon l'une quelconque des revendications précédentes, le substrat (3) comprenant au moins une matière isolante céramique, notamment un oxyde d'aluminium, un nitrure d'aluminium ou un carbure de silicium, une matière vitreuse sandwich ou une matière de carte de circuit imprimé.

9. Système selon l'une quelconque des revendications précédentes, la couche de métallisation (9) comprenant au moins une matière aurifère, une matière argentifère ou un alliage métallique.

10. Système selon l'une quelconque des revendications précédentes, la structure de capteur (7) comportant au moins un élément à résistance, l'élément à résistance étant constitué d'une couche fine de platine ou d'un alliage de platine.

11. Un procédé de fabrication d'un élément capteur de température, destiné à être connecté avec un composant électronique (17) ou un module électronique, comportant
la mise à disposition d'au moins un substrat (3) isolant électrique, comprenant une matière isolante céramique, une matière vitreuse sandwich ou une matière de carte de circuit imprimé ;
le placement d'au moins une structure de capteur (7) pourvue de surfaces de contact (5a, 5b), pour la mise en contact de la structure de capteur (7) au moins par endroits sur une première face du substrat (3) isolant électrique ; et
(i) la pré-application d'au moins un agent adhésif (12) au moins en partie sur une deuxième face du substrat (3) isolant électrique, la première face étant placée au vis-à-vis de la deuxième face ou
(ii) la placement d'au moins une couche de métallisation (9) au moins par endroits sur la deuxième face du substrat (3) isolant électrique et la pré-application d'au moins une pâte de brasure (11) au moins en partie sur la couche de métallisation (9) et
le placement de l'élément capteur de température sur au moins un élément de support (15), l'élément de support (15) étant en contact au moins partiel avec l'agent adhésif (12) pré-appliqué ou avec la pâte de brasure (11) pré-appliquée, l'élément de support (15) comprenant au moins un film de transfert ou un cadre de tranche.
